# FASCICULE DE BREVET EUROPEEN

(11) **EP 3 656 630 B1**
(45) Date de publication et mention de la délivrance du brevet: **31.08.2022**
(21) Numéro de dépôt: 19210267.1
(22) Date de dépôt: 20.11.2019
(51) Int. Cl.: B61D 17/10, B61D 1/04, B61D 33/00, B60N 2/01, B60N 2/24

(54) **VOITURE DE VÉHICULE FERROVIAIRE, À ARRANGEMENT DE SIÈGES MODULABLE**
WAGEN EINES SCHIENENFAHRZEUGS MIT MODULIERBARER SITZANORDNUNG
RAILWAY VEHICLE CAR, WITH MODULAR ARRANGEMENT OF SEATS

(30) Priorité: 22.11.2018 FR 1871714
(43) Date de publication de la demande: 27.05.2020
(73) Titulaire: SpeedInnov, 75008 Paris (FR)
(72) Inventeur: DRUART, Marin, 17780 SOUBISE (FR); PAILLER, Christophe, 17180 PERIGNY (FR)
(74) Mandataire: Lavoix

(56) Documents cités:
- EP-A1- 0 936 122
- EP-A1- 3 121 087
- EP-A1- 3 248 830
- US-A- 2 815 723

## Description

La présente invention concerne une voiture de véhicule ferroviaire, à arrangement de sièges modulable.

Plus particulièrement, le véhicule ferroviaire est de préférence un train à grande vitesse (TGV).

Actuellement, pour les voitures de train à grande vitesse logeant au moins une salle passagers, il est difficile de changer l'arrangement des sièges pour passer d'une configuration de seconde classe à une configuration de première classe, et inversement.

Un assemblage de première classe comporte une pluralité de sièges de première classe, présentant tous une première largeur prise dans la direction transversale, et répartis en :
- un premier ensemble de sièges de première classe comprenant un unique premier alignement de sièges de première classe alignés dans la direction longitudinale, et
- un second ensemble de sièges de première classe, comprenant deux seconds alignements de sièges de première classe alignés dans la direction longitudinale,

Par ailleurs, un assemblage de seconde classe comporte une pluralité de sièges de seconde classe, présentant tous une seconde largeur prise dans la direction transversale, la seconde largueur étant inférieure à la première largeur, et les sièges de seconde classé étant répartis en :
- un premier ensemble de sièges de seconde classe comprenant deux premiers alignements de sièges de seconde classe alignés dans la direction longitudinale, et
- un second ensemble de sièges de seconde classe, comprenant deux seconds alignements de sièges de seconde classe alignés dans la direction longitudinale.

Ainsi, il apparaît que le premier ensemble de sièges de première classe présente une largeur différente de celle du premier ensemble de sièges de seconde classe, et que le second ensemble de sièges de première classe présente une largeur différente de celle du second ensemble de sièges de seconde classe.

EP 3 121 087 décrit un exemple de voiture de véhicule ferroviaire dont les sièges sont modulables, pour permettre de les passer dans une première configuration (première classe) ou dans une seconde configuration (seconde classe).

La présente invention a notamment pour but de proposer une voiture de véhicule ferroviaire pouvant s'adapter aisément à un assemblage de première classe ou à un assemblage de seconde classe, cela malgré les différences de largeur évoquées ci-dessus.

A cet effet, l'invention a notamment pour objet une voiture de véhicule ferroviaire, comprenant une salle passagers comportant un plancher s'étendant en longueur selon une direction longitudinale, le plancher portant un couloir s'étendant en longueur dans la direction longitudinale, le couloir étant destiné à être bordé de part et d'autre dans une direction transversale perpendiculaire à la direction longitudinale par des premier et second ensembles de sièges, caractérisé en ce que le couloir est formé par au moins un panneau s'étendant en longueur dans la direction longitudinale, le plancher comportant des moyens de solidarisation avec chaque panneau de couloir dans des première et seconde configurations possibles, telles que chaque panneau de couloir dans la première configuration est décalé dans la direction transversale par rapport à ce même panneau de couloir dans la seconde configuration.

Le couloir mobile peut s'adapter à l'arrangement de première classe dans la première configuration, ou à l'arrangement de seconde classe dans la seconde configuration. Il suffit donc de déplacer le couloir mobile pour passer d'un arrangement à l'autre.

Une voiture selon l'invention peut comporter en outre l'une ou plusieurs des caractéristiques suivantes, prises seules ou selon toutes combinaisons techniquement envisageables.
- La voiture comporte des rails s'étendant dans la direction transversale, chaque panneau de couloir étant monté sur au moins l'un de ces rails.
- Le couloir est formé d'un panneau de couloir unique s'étendant sensiblement sur toute la longueur de la salle passagers.
- La voiture comporte un revêtement de couloir couvrant chaque panneau de couloir.
- Chaque panneau de couloir comporte une partie centrale horizontale, et des première et seconde parties latérales verticales solidaires de la partie centrale.
- La voiture comporte les premier et second ensembles de sièges, chacun des premier et second ensemble comportant une pluralité de pieds de support, chaque pied de support supportant au moins un siège du premier ou second ensemble correspondant, les pieds de support du premier ensemble de sièges reposant tous sur la première partie latérale de panneau de couloir, et les pieds de support du second ensemble de sièges reposant tous sur la seconde partie latérale de panneau de couloir.
- La voiture comporte des premier et second panneaux d'estrade, tels que : le premier panneau d'estrade est porté latéralement d'une part par la première partie latérale de panneau de couloir, et d'autre part par des premiers organes structurels de la voiture, le premier ensemble de sièges étant disposé au-dessus de ce premier panneau d'estrade, et le second panneau d'estrade est porté latéralement d'une part par la seconde partie latérale de panneau de couloir, et d'autre part par des seconds organes structurels de la voiture, le second ensemble de sièges étant disposé au-dessus de ce second panneau d'estrade.

L'invention concerne également un ensemble formé par une voiture telle que définie précédemment, un assemblage de première classe et un assemblage de seconde classe, tels que :
- l'assemblage de première classe comporte une pluralité de sièges de première classe, présentant tous une première largeur prise dans la direction transversale, et répartis en :
   - un premier ensemble de sièges de première classe comprenant un premier alignement de sièges de première classe alignés dans la direction longitudinale, et
   - un second ensemble de sièges de première classe, comprenant un second alignement de paires de sièges de première classe alignées dans la direction longitudinale,
- l'assemblage de seconde classe comporte une pluralité de sièges de seconde classe, présentant tous une seconde largeur prise dans la direction transversale, la seconde largueur étant inférieure à la première largeur, et les sièges de seconde classé étant répartis en :
   - un premier ensemble de sièges de seconde classe comprenant un premier alignement de paires de sièges de seconde classe alignées dans la direction longitudinale, et
   - un second ensemble de sièges de seconde classe, comprenant un second alignement de paires de sièges de seconde classe alignées dans la direction longitudinale,
- la voiture étant assemblée avec l'assemblage de première classe lorsque chaque panneau de couloir est dans la première configuration, et la voiture étant assemblée avec l'assemblage de seconde classe lorsque chaque panneau de couloir est dans la seconde configuration.

Avantageusement, l'assemblage de première classe comporte des premier et second panneaux d'estrade de première classe, le premier panneau d'estrade de première classe présentant une première largeur, prise dans la direction transversale, et le second panneau d'estrade de première classe présentant une seconde largeur prise dans la direction transversale, supérieure à la première largeur ; et l'assemblage de seconde classe comporte des premier et second panneaux d'estrade de seconde classe, présentant des largeurs, prises dans la direction transversale, sensiblement identiques.

L'invention concerne enfin un procédé de reconfiguration d'un ensemble tel que défini précédemment, caractérisé en ce qu'il comporte :
- le démontage des sièges de première classe, respectivement des sièges de seconde classe ;
- le déplacement de chaque panneau de couloir depuis la première configuration vers la seconde configuration, respectivement depuis la seconde configuration vers la première configuration ;
- l'assemblage des sièges de seconde classe, respectivement des sièges de première classe.

L'invention sera mieux comprise à la lecture de la description qui va suivre, donnée uniquement à titre d'exemple et faite en se référant aux figures annexées, parmi lesquelles :
- [Fig 1] La figure 1 est une vue en coupe transversale d'une voiture de véhicule ferroviaire selon un exemple de mode de réalisation de l'invention, dans une première configuration équipée d'un arrangement de sièges de première classe ;
- [Fig 2] [Fig 3] [Fig 4] Les figures 2 à 4 sont des vues similaires à la figure 1, de la voiture de la figure 1 au cours d'étapes successives de passage de la première configuration à une seconde configuration ;
- [Fig 5] La figure 5 est une vue similaire à la figure 1, de la voiture de la figure 1, dans une seconde configuration équipée d'un arrangement de sièges de seconde classe.

On a représenté partiellement, sur les figures, une voiture 10 de véhicule ferroviaire, notamment de train à grande vitesse (TGV).

La voiture 10 comporte une caisse structurelle 12 délimitant une salle de passagers 14.

La voiture 10 peut être indifféremment une voiture à un étage ou une voiture à deux étages. Dans le cas d'une voiture à deux étages, la présente invention décrite ci-dessous peut s'appliquer indifféremment à l'étage inférieur ou à l'étage supérieur ou à la fois aux étages inférieur et supérieur.

La caisse structurelle 12 comporte un plancher 16 s'étendant en longueur le long d'une direction longitudinale X, et en largeur le long d'une direction transversale Y perpendiculaire à la direction longitudinale X.

Le plancher 16 porte un couloir s'étendant en longueur le long de la direction longitudinale X. Le couloir permet aux passagers de se déplacer dans la salle 14.

Le couloir est formé par au moins un panneau. De préférence, le couloir est formé par un panneau 18 unique s'étendant sensiblement sur toute la longueur de la salle passagers 14. En variante, le couloir est formé d'une pluralité de panneaux 18 alignés dans la direction longitudinale.

Avantageusement, un revêtement de couloir (non représenté) couvre chaque panneau de couloir 18. Plus particulièrement, lorsque le couloir est formé d'une pluralité de panneaux 18, un unique revêtement de couloir recouvre seul l'ensemble des panneaux.

Chaque panneau de couloir 18 comporte une partie centrale horizontale 18c, et des première 18a et seconde 18b parties latérales verticales solidaires de la partie centrale 18a. Chaque panneau de couloir 18 présente donc une section transversale en forme de U.

Les première 18a et seconde 18b parties latérales sont renforcées de manière à pouvoir supporter une masse importante, comme cela sera décrit ultérieurement.

La voiture 10 comporte un assemblage de sièges pour les passagers.

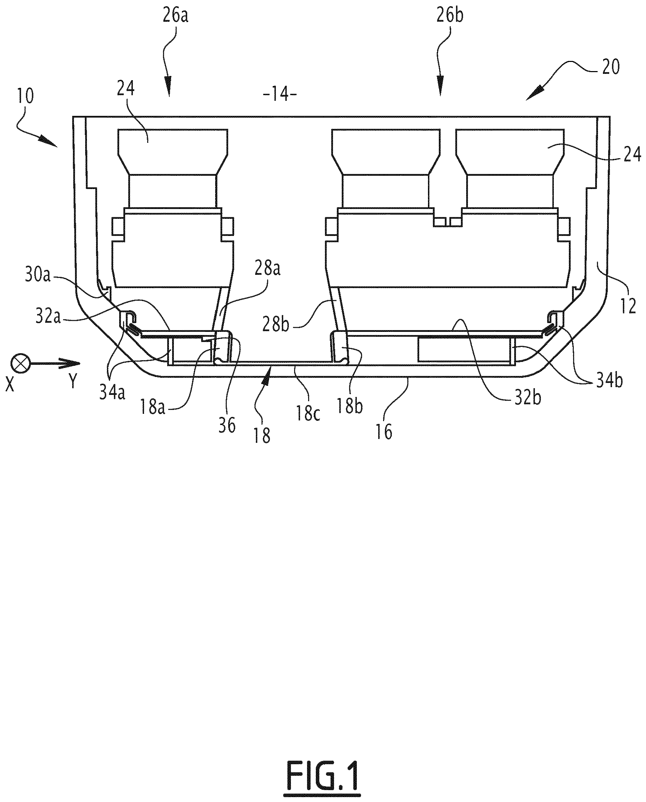

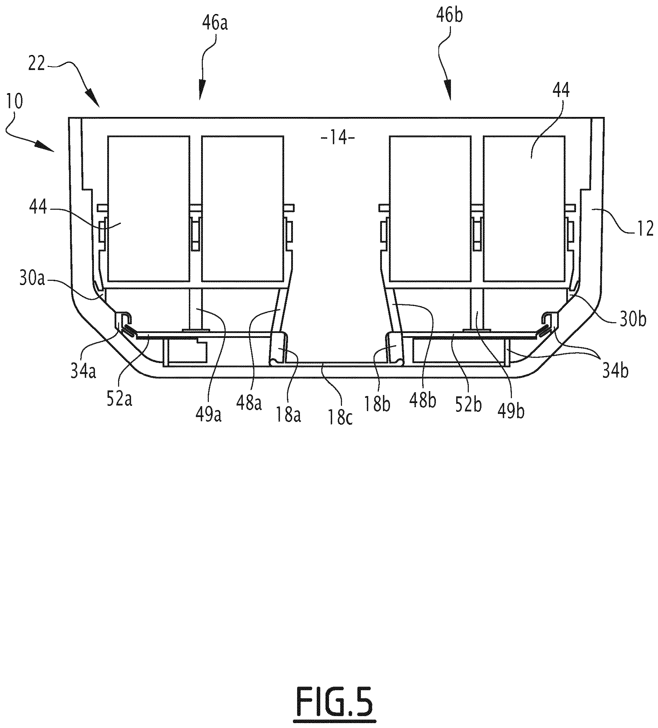

Plus particulièrement, on a représenté sur la figure 1 un assemblage 20 de sièges de première classe, et sur la figure 5 un assemblage 22 de sièges de seconde classe.

L'assemblage 20 de sièges de première classe comporte une pluralité de sièges de première classe 24, présentant chacun une première largeur prise dans la direction transversale Y.

Les sièges de première classe 24 sont répartis en un premier ensemble 26a de sièges de première classe, et un second ensemble 26b de sièges de première classe.

Le premier ensemble 26a de sièges de première classe est formé par un unique alignement de sièges de première classe 24 le long de la direction longitudinale X.

Chacun de ces sièges de première classe est porté d'une part par un premier pied de support 28a propre à ce siège, et d'autre part par un premier élément structurel 30a de la structure 12. Le premier pied de support 28a repose sur la première partie latérale verticale 18a.

Le second ensemble 26b de sièges de première classe est formé par un alignement de paires de sièges de première classe 24 le long de la direction longitudinale X.

Chacune des paires de ces sièges de première classe est portée d'une part par un second pied de support 28b propre à cette paire, et d'autre part par un second élément structurel 30b de la structure 12. Le second pied de support 28b repose sur la seconde partie latérale verticale 18b.

Ainsi, le couloir est bordé, de part et d'autre dans la direction transversale Y, par les premier 26a et second 26b ensembles de sièges de première classe.

Avantageusement, chaque ensemble de siège est monté sur une estrade, le couloir étant défini entre les estrades.

L'assemblage de première classe comporte par ailleurs un premier panneau d'estrade de première classe 32a porté latéralement d'une part par la première partie latérale de panneau de couloir 18a, et d'autre part par des premiers organes structurels 34a de la structure 12. Le premier ensemble de sièges de première classe 26a est alors disposé au-dessus de ce premier panneau d'estrade de première classe 32a.

L'assemblage de première classe comporte également un second panneau d'estrade de première classe 32b porté latéralement d'une part par la seconde partie latérale de panneau de couloir 18b, et d'autre part par des seconds organes structurels 34b de la structure 12. Le second ensemble de sièges de première classe 26b est alors disposé au-dessus de ce second panneau d'estrade de première classe 32b.

Le premier panneau d'estrade de première classe 32a présente une largeur, prise dans la direction transversale Y, inférieure à la largeur du second panneau d'estrade de première classe 32b.

Conformément à l'invention, le plancher 16 comportant des moyens 36 de solidarisation avec chaque panneau de couloir 18 dans des première et seconde configurations possibles, telles que chaque panneau de couloir 18 dans la première configuration est décalé dans la direction transversale Y par rapport à ce même panneau de couloir 18 dans la seconde configuration. La première configuration est représentée sur la figure 1, et la seconde configuration sur la figure 5.

Ainsi, la voiture 10 est assemblée avec l'assemblage de première classe lorsque chaque panneau de couloir 18 est dans la première configuration.

Avantageusement, le plancher 16 est équipé de rails s'étendant dans la direction transversale Y, chaque panneau de couloir 18 étant monté sur au moins l'un de ces rails. Ces rails permettent donc de passer aisément d'une configuration à l'autre.

L'assemblage 22 de sièges de seconde classe, représenté sur la figure 5, comporte une pluralité de sièges de seconde classe 44, présentant chacun une seconde largeur prise dans la direction transversale Y. Il est à noter que la seconde largeur des sièges de seconde classe 44 est inférieure à la première largeur des sièges de première classe 24.

Les sièges de secondes classe 44 sont répartis en un premier ensemble 46a de sièges de seconde classe, et un second ensemble 46b de sièges de seconde classe.

Le premier ensemble 46a de sièges de seconde classe est formé par un alignement de paires de sièges de seconde classe 44 le long de la direction longitudinale X.

Chacune de ces paires de sièges de seconde classe est portée d'une part par un premier pied de support 48a propre à cette paire de sièges, et d'autre part par le premier élément structurel 30a correspondant de la structure 12. Le premier pied de support 48a repose sur la première partie latérale verticale 18a. Avantageusement, la paire de sièges est également portée par un pied central 49a.

Le second ensemble 46b de sièges de seconde classe est formé par un alignement de paires de sièges de seconde classe 44 le long de la direction longitudinale X.

Chacune des paires de ces sièges de seconde classe est portée d'une part par un second pied de support 48b propre à cette paire, et d'autre part par le second élément structurel 30b correspondant de la structure 12. Le second pied de support 48b repose sur la seconde partie latérale verticale 18b. Avantageusement, la paire de sièges est également portée par un pied central 49b.

Ainsi, le couloir est bordé, de part et d'autre dans la direction transversale Y, par les premier 26a et second 26b ensembles de sièges de seconde classe.

Avantageusement, chaque ensemble de siège est monté sur une estrade, le couloir étant défini entre les estrades.

L'assemblage de seconde classe comporte par ailleurs un premier panneau d'estrade de seconde classe 52a porté latéralement d'une part par la première partie latérale de panneau de couloir 18a, et d'autre part par les premiers organes structurels 34a de la structure 12. Le premier ensemble de sièges de seconde classe 46a est alors disposé au-dessus de ce premier panneau d'estrade de seconde classe 52a. En particulier, le pied central 49a repose sur ce premier panneau d'estrade de seconde classe 52a.

L'assemblage de seconde classe comporte également un second panneau d'estrade de seconde classe 52b porté latéralement d'une part par la seconde partie latérale de panneau de couloir 18b, et d'autre part par les seconds organes structurels 34b de la structure 12. Le second ensemble de sièges de seconde classe 46b est alors disposé au-dessus de ce second panneau d'estrade de seconde classe 52b. En particulier, le pied central 49b repose sur ce second panneau d'estrade de seconde classe 52b.

Le premier panneau d'estrade de seconde classe 52a présente une largeur, prise dans la direction transversale Y, égale à la largeur du second panneau d'estrade de seconde classe 52b. Par exemple, les premier 52a et second 52b panneaux d'estrade de seconde classe sont identiques.

Il est à noter que la voiture 10 est assemblée avec l'assemblage de seconde classe 22 lorsque chaque panneau de couloir 18 est dans la seconde configuration.

On décrira ci-dessous un procédé de reconfiguration de la voiture 10, pour le passage de la première configuration (figure 1) vers la seconde configuration (figure 5).

Au cours d'une première étape, les sièges de première classe 24 sont démontés puis stockés hors de la voiture 10.

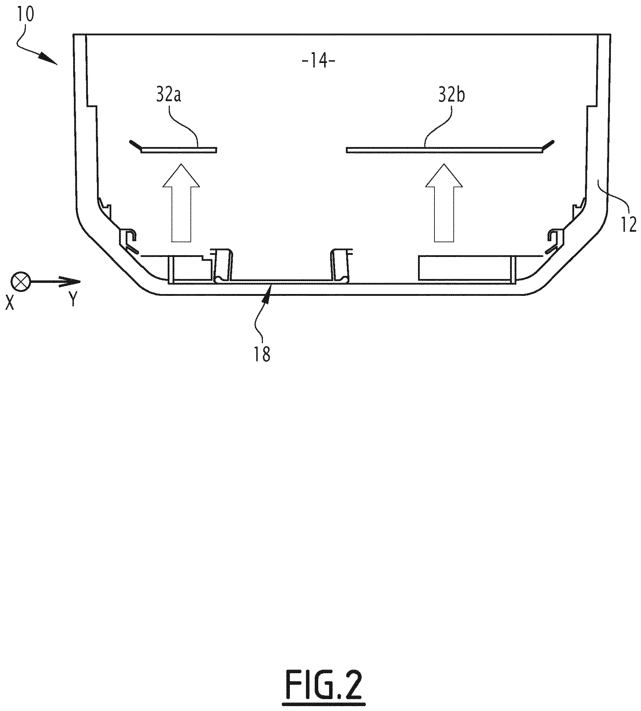

Au cours d'une seconde étape, représentée sur la figure 2, les estrades de première classe 32a, 32b sont démontées puis stockées hors de la voiture 10.

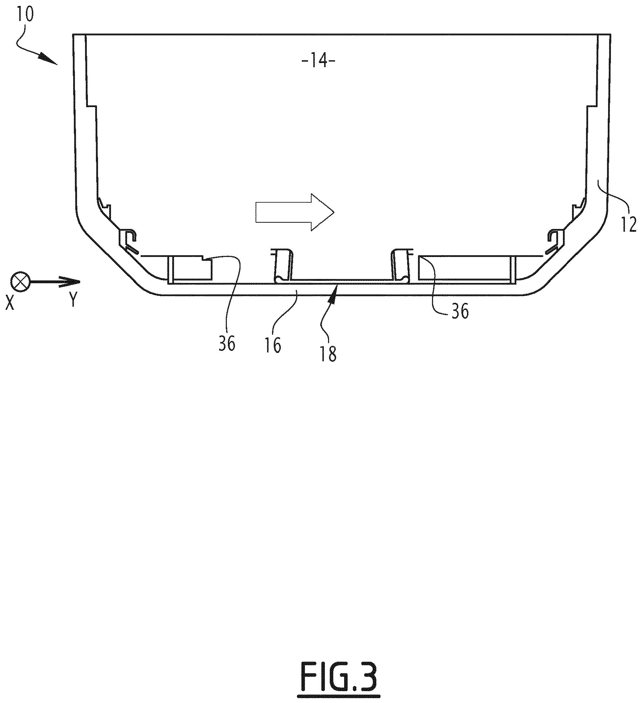

Au cours d'une troisième étape, représentée sur la figure 3, chaque panneau de couloir 18 est déplacé vers sa seconde configuration. On notera que le mouvement de chaque panneau de couloir 18 est limité par les moyens de solidarisation 36, qui forment des butées coopérant avec le panneau de couloir 18 dans la configuration correspondante. Le panneau de couloir 18 est ensuite fixé dans sa seconde configuration.

Dans cette seconde configuration, chaque panneau de couloir 18 est centré par rapport à la structure 12, dans la direction transversale Y.

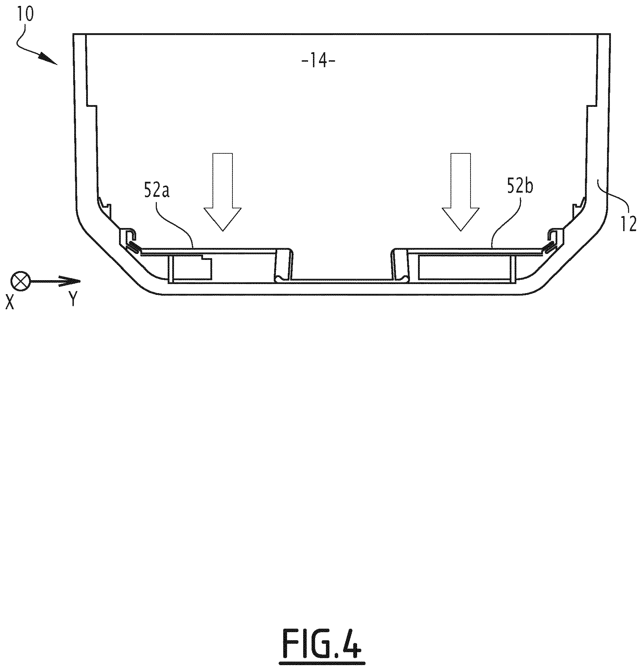

Au cours d'une quatrième étape, représentée sur la figure 4, les estrades de seconde classe 52a, 52b sont assemblées avec le panneau de couloir 18 et la structure 12.

Enfin, au cours d'une cinquième étape, représentée sur la figure 5, les sièges de seconde classe 44 sont assemblés avec le panneau de couloir 18 et la structure 12.

On notera que le passage de la seconde configuration vers la première configuration peut être effectué de manière totalement similaire. En d'autres termes, les sièges de seconde classe 44 sont démontés, puis les estrades de seconde classe sont démontées, puis chaque panneau de couloir 18 est passé dans sa première configuration, puis les estrades de première classe sont assemblées, puis les sièges de première classe 24 sont assemblés.

Compte tenu de ce qui précède, il apparaît clairement que le passage d'une configuration à l'autre est particulièrement simple à mettre en oeuvre.

On notera que l'invention n'est pas limitée au mode de réalisation précédemment décrit, et pourrait présenter diverses variantes complémentaires sans sortir du cadre des revendications.

## Revendications

1. Voiture (10) de véhicule ferroviaire, comprenant une salle passagers (14) comportant un plancher (16) s'étendant en longueur selon une direction longitudinale (X), le plancher (16) portant un couloir s'étendant en longueur dans la direction longitudinale (X), le couloir étant destiné à être bordé, de part et d'autre dans une direction transversale (Y) perpendiculaire à la direction longitudinale (X), par des premier (26a ; 46a) et second (26b ; 46b) ensembles de sièges, **caractérisé en ce que** le couloir est formé par au moins un panneau (18) s'étendant en longueur dans la direction longitudinale (X), le plancher (16) comportant des moyens (36) de solidarisation avec chaque panneau (18) de couloir dans des première et seconde configurations possibles, telles que chaque panneau (18) de couloir dans la première configuration est décalé dans la direction transversale (Y) par rapport à ce même panneau (18) de couloir dans la seconde configuration.

2. Voiture (10) selon la revendication 1, comportant des rails s'étendant dans la direction transversale (Y), chaque panneau (18) étant monté sur au moins l'un de ces rails.

3. Voiture (10) selon la revendication 1 ou 2, dans laquelle le couloir est formé d'un panneau (18) unique s'étendant sensiblement sur toute la longueur de la salle passagers (14).

4. Voiture (10) selon l'une quelconque des revendications précédentes, comprenant un revêtement de couloir couvrant chaque panneau (18) de couloir.

5. Voiture (10) de véhicule ferroviaire selon l'une quelconque des revendications précédentes, dans lequel chaque panneau (18) de couloir comporte une partie centrale (18c) horizontale, et des première (18a) et seconde (18b) parties latérales verticales solidaires de la partie centrale (18c).

6. Voiture (10) de véhicule ferroviaire selon la revendication 5, comprenant les premier (26a ; 46a) et second (26b ; 46b) ensembles de sièges, chacun des premier et second ensemble comportant une pluralité de pieds de support (28a, 28b ; 48a, 48b), chaque pied de support (28a, 28b ; 48a, 48b) supportant au moins un siège (24 ; 44) du premier ou second ensemble correspondant, les pieds de support (28a; 48a) du premier ensemble de sièges (26a ; 46a) reposant tous sur la première partie latérale (18a) de panneau de couloir, et les pieds de support (28b ; 48b) du second ensemble de sièges (26b ; 46b) reposant tous sur la seconde partie latérale (18b) de panneau de couloir.

7. Voiture (10) de véhicule ferroviaire selon la revendication 5 ou 6, comprenant des premier (32a ; 52a) et second (32b ; 52b) panneaux d'estrade, tels que :
- le premier panneau d'estrade (32a ; 52a) est porté latéralement d'une part par la première partie latérale (18a) de panneau de couloir, et d'autre part par des premiers organes structurels (34a) de la voiture, le premier ensemble de sièges (26a ; 46a) étant disposé au-dessus de ce premier panneau d'estrade (32a ; 52a),
- le second panneau d'estrade (32b ; 52b) est porté latéralement d'une part par la seconde partie latérale (18b) de panneau de couloir, et d'autre part par des seconds organes structurels (34b) de la voiture, le second ensemble de sièges (26a ; 46a) étant disposé au-dessus de ce second panneau d'estrade (32b ; 52b).

8. Ensemble formé par une voiture (10) selon l'une quelconque des revendications précédentes, un assemblage de première classe (20) et un assemblage de seconde classe (22), tels que :
- l'assemblage de première classe (20) comporte une pluralité de sièges de première classe (24), présentant tous une première largeur prise dans la direction transversale (Y), et répartis en :
- un premier ensemble (26a) de sièges de première classe comprenant un premier alignement de sièges de première classe (24) alignés dans la direction longitudinale (X), et
- un second ensemble (26b) de sièges de première classe, comprenant un second alignement de paires de sièges de première classe (24) alignées dans la direction longitudinale (X),
- l'assemblage de seconde classe (22) comporte une pluralité de sièges de seconde classe (44), présentant tous une seconde largeur prise dans la direction transversale (Y), la seconde largueur étant inférieure à la première largeur, et les sièges de seconde classé étant répartis en :
- un premier ensemble (46a) de sièges de seconde classe comprenant un premier alignement de paires de sièges de seconde classe (44) alignées dans la direction longitudinale (X), et
- un second ensemble (46b) de sièges de seconde classe, comprenant un second alignement de paires de sièges de seconde classe (44) alignées dans la direction longitudinale (X),
- la voiture (10) étant assemblée avec l'assemblage de première classe (20) lorsque chaque panneau de couloir (18) est dans la première configuration, et la voiture (10) étant assemblée avec l'assemblage de seconde classe (22) lorsque chaque panneau de couloir (18) est dans la seconde configuration.

9. Ensemble selon la revendication 8, comportant une voiture (10) selon la revendication 7, dans lequel :
- l'assemblage de première classe (20) comporte des premier (32a) et second (32b) panneaux d'estrade de première classe, le premier panneau d'estrade de première classe (32a) présentant une première largeur, prise dans la direction transversale (Y), et le second panneau d'estrade de première classe (32b) présentant une seconde largeur prise dans la direction transversale (Y), supérieure à la première largeur ;
- l'assemblage de seconde classe (22) comporte des premier (52a) et second (52b) panneaux d'estrade de seconde classe, présentant des largeurs, prises dans la direction transversale (Y), sensiblement identiques.

10. Procédé de reconfiguration d'un ensemble selon la revendication 8 ou 9, **caractérisé en ce qu'**il comporte :
- le démontage des sièges de première classe (24), respectivement des sièges de seconde classe (44) ;
- le déplacement de chaque panneau de couloir depuis la première configuration vers la seconde configuration, respectivement depuis la seconde configuration vers la première configuration ;
- l'assemblage des sièges de seconde classe, respectivement des sièges de première classe.

## Patentansprüche

1. Wagen (10) eines Schienenfahrzeugs, umfassend einen Fahrgastraum (14) umfassend einen Boden (16), der sich längs in Längsrichtung (X) erstreckt, wobei der Boden (16) einen Gang trägt, der sich längs in Längsrichtung (X) erstreckt, wobei der Gang dazu bestimmt ist, auf beiden Seiten in einer Querrichtung (Y) senkrecht zu der Längsrichtung (X) durch eine erste (26a; 46a) und eine zweite (26b; 46b) Sitzanordnung begrenzt zu sein, **dadurch gekennzeichnet, dass** der Gang durch mindestens eine Platte (18) gebildet ist, die sich längs in Längsrichtung (X) erstreckt, der Boden (16) umfassend Einrichtungen (36) zur festen Verbindung mit jeder Platte (18) des Gangs in einer ersten und einer zweiten möglichen Konfiguration, sodass jede Platte (18) des Gangs in der ersten Konfiguration in der Querrichtung (Y) in Bezug auf dieselbe Platte (18) des Gangs in der zweiten Konfiguration versetzt ist.

2. Wagen (10) nach Anspruch 1, umfassend Schienen, die sich in Querrichtung (Y) erstrecken, wobei jede Platte (18) auf mindestens einer dieser Schienen montiert ist.

3. Wagen (10) nach Anspruch 1 oder 2, wobei der Gang aus einer einzelnen Platte (18) gebildet ist, die sich im Wesentlichen über die gesamte Länge des Fahrgastraums (14) erstreckt.

4. Wagen (10) nach einem der vorherigen Ansprüche, umfassend eine Gangverkleidung, die jede Platte (18) des Gangs abdeckt.

5. Wagen (10) eines Schienenfahrzeugs nach einem der vorherigen Ansprüche, wobei jede Platte (18) des Gangs ein horizontaler Mittelteil (18c) und ein erstes (18a) und ein zweites (18b) vertikales Seitenteil umfasst, die fest mit dem Mittelteil (18c) verbunden sind.

6. Wagen (10) eines Schienenfahrzeugs nach Anspruch 5, umfassend die erste (26a; 46a) und die zweite (26b; 46b) Sitzanordnung, jede von der ersten und der zweiten Sitzanordnung umfassend eine Vielzahl von Stützbeinen (28a, 28b; 48a, 48b), wobei jedes Stützbein (28a, 28b; 48a, 48b) mindestens einen Sitz (24; 44) der entsprechenden ersten oder zweiten Anordnung trägt, wobei die Stützbeine (28a; 48a) der ersten Sitzanordnung (26a; 46a) alle auf dem ersten Seitenteil (18a) der Gangplatte ruhen, und die Stützbeine (28b; 48b) der zweiten Sitzanordnung (26b; 46b) alle auf dem zweiten Seitenteil (18b) der Gangplatte ruhen.

7. Wagen (10) eines Schienenfahrzeugs nach Anspruch 5 oder 6, umfassend eine erste (32a; 52a) und eine zweite (32b; 52b) Podestplatte, wie beispielsweise:
- die erste Podestplatte (32a; 52a) wird seitlich einerseits von dem ersten Seitenteil (18a) der Gangplatte und andererseits von ersten Strukturelementen (34a) des Wagens getragen, wobei die erste Sitzanordnung (26a; 46a) oberhalb dieser ersten Podestplatte (32a; 52a) angeordnet ist,
- die zweite Podestplatte (32b; 52b) wird seitlich einerseits von dem zweiten Seitenteil (18b) der Gangplatte und andererseits von zweiten Strukturelementen (34b) des Wagens getragen, wobei die zweite Sitzanordnung (26a; 46a) oberhalb dieser zweiten Podestplatte (32b; 52b) angeordnet ist.

8. Anordnung, gebildet aus einem Wagen (10) nach einem der vorherigen Ansprüche, einer Zusammenstellung der ersten Klasse (20) und einer Zusammenstellung der zweiten Klasse (22), wie beispielsweise:
- die Zusammenstellung der ersten Klasse (20) umfasst eine Vielzahl von Sitzen der ersten Klasse (24), die in Querrichtung (Y) alle eine erste Breite aufweisen und aufgeteilt sind in:
- eine erste Anordnung (26a) von Sitzen der ersten Klasse, umfassend eine erste Reihe von Sitzen (24) der ersten Klasse, die in Längsrichtung (X) ausgerichtet sind, und
- eine zweite Anordnung (26b) von Sitzen der ersten Klasse, umfassend eine zweite Reihe von Paaren von Sitzen der ersten Klasse (24), die in Längsrichtung (X) ausgerichtet sind,
- die Zusammenstellung der zweiten Klasse (22) umfasst eine Vielzahl von Sitzen der zweiten Klasse (44), die in Querrichtung (Y) alle eine zweite Breite aufweisen, wobei die zweite Breite kleiner ist als die erste Breite und die Sitze für die zweite Klasse aufgeteilt sind in:
- eine erste Anordnung (46a) von Sitzen der zweiten Klasse, umfassend eine erste Reihe von Paaren von Sitzen der zweiten Klasse (44), die in Längsrichtung (X) ausgerichtet sind, und
- eine zweite Anordnung (46b) von Sitzen der zweiten Klasse, umfassend eine zweite Reihe von Paaren von Sitzen der zweiten Klasse (44), die in Längsrichtung (X) ausgerichtet sind,
- wobei der Wagen (10) mit der Zusammenstellung der ersten Klasse (20) zusammengestellt ist, wenn jede Gangplatte (18) in der ersten Konfiguration ist, und der Wagen (10) mit der Zusammenstellung der zweiten Klasse (22) zusammengestellt ist, wenn jede Gangplatte (18) in der zweiten Konfiguration ist.

9. Anordnung nach Anspruch 8, umfassend einen Wagen (10) nach Anspruch 7, wobei:
- die Zusammenstellung der ersten Klasse (20) eine erste (32a) und eine zweite (32b) Podestplatte der ersten Klasse umfasst, wobei die erste Podestplatte der ersten Klasse (32a) in Querrichtung (Y) eine erste Breite aufweist und die zweite Podestplatte der ersten Klasse (32b) in Querrichtung (Y) eine zweite Breite aufweist, die größer ist als die erste Breite;
- die Zusammenstellung der zweiten Klasse (22) eine erste (52a) und eine zweite (52b) Podestplatte der zweiten Klasse umfasst, die in Querrichtung (Y) betrachtet im Wesentlichen identische Breiten aufweisen.

10. Verfahren zur Neukonfiguration einer Anordnung nach Anspruch 8 oder 9, **dadurch gekennzeichnet, dass** es Folgendes umfasst:
- das Ausbauen der Sitze der ersten Klasse (24) bzw. der Sitze der zweiten Klasse (44);
- das Verlagern von jeder Gangplatte von der ersten Konfiguration in die zweite Konfiguration bzw. von der zweiten Konfiguration in die erste Konfiguration;
- das Zusammenstellen der Sitze der zweiten Klasse bzw. der Sitze der ersten Klasse.

## Claims

1. A railway vehicle car (10), comprising a passenger compartment (14) comprising a floor (16) extending lengthwise in a longitudinal direction (X), the floor (16) carrying an aisle extending lengthwise in the longitudinal direction (X), the aisle being intended to be bordered on either side in a transverse direction (Y) perpendicular to the longitudinal direction (X) by first (26a; 46a) and second (26b; 46b) sets of seats, **characterised in that** the aisle is formed by at least one panel (18) extending lengthwise in the longitudinal direction (X), the floor (16) comprising means (36) for rigidly connecting to each aisle panel (18) in first and second possible configurations, such that each aisle panel (18) in the first configuration is offset in the transverse direction (Y) with respect to that same aisle panel (18) in the second configuration.

2. The car (10) according to claim 1, having rails extending in the transverse direction (Y), each panel (18) being mounted on at least one of these rails.

3. The car (10) according to claim 1 or 2, wherein the corridor is formed by a single panel (18) extending substantially the full length of the passenger compartment (14).

4. The car (10) according to any one of the preceding claims, comprising an aisle liner covering each aisle panel (18).

5. The railway vehicle car (10) according to any one of the preceding claims, wherein each aisle panel (18) comprises a horizontal central portion (18c), and first (18a) and second (18b) vertical side portions rigidly connected to the central portion (18c).

6. The railway vehicle car (10) according to claim 5, comprising first (26a; 46a) and second (26b; 46b) seating assemblies, each of the first and second assemblies having a plurality of support legs (28a, 28b; 48a, 48b), each support leg (28a, 28b; 48a, 48b) supporting at least one seat (24 ; 44) of the corresponding first or second set, the support legs (28a; 48a) of the first seating assembly (26a; 46a) all resting on the first aisle panel side portion (18a), and the support legs (28b; 48b) of the second seating assembly (26b; 46b) all resting on the second aisle panel side portion (18b).

7. The railway vehicle car (10) according to claim 5 or 6, comprising first (32a; 52a) and second (32b; 52b) platform panels, such as:
- the first platform panel (32a; 52a) is supported laterally on the one hand by the first aisle panel side portion (18a), and on the other hand by first structural members (34a) of the car, the first seating assembly (26a; 46a) being disposed above this first platform panel (32a; 52a),
- the second platform panel (32b; 52b) is supported laterally on the one hand by the second aisle panel side portion (18b), and on the other hand by second structural members (34b) of the car, the second seating assembly (26a; 46a) being disposed above this second platform panel (32b; 52b).

8. An assembly formed by a car (10) according to any of the preceding claims, a first-class assembly (20) and a second-class assembly (22), such as:
- the first-class assembly (20) comprises a plurality of first-class seats (24), all having a first width taken in the transverse direction (Y), and divided into:
- a first first-class seating assembly (26a) comprising a first row of first-class seats (24) aligned in the longitudinal direction (X), and
- a second first-class seating assembly (26b) comprising a second row of pairs of first-class seats (24) aligned in the longitudinal direction (X),
- the second-class assembly (22) comprises a plurality of second-class seats (44), all having a second width taken in the transverse direction (Y), the second width being less than the first width, and the second-class seats being divided into:
- a first second-class seating assembly (46a) comprising a first row of second-class seats (44) aligned in the longitudinal direction (X), and
- a second second-class seating assembly (46b) comprising a second row of pairs of second-class seats (44) aligned in the longitudinal direction (X),
- the car (10) being assembled with the first-class assembly (20) when each aisle panel (18) is in the first configuration, and the car (10) being assembled with the second-class assembly (22) when each aisle panel (18) is in the second configuration.

9. The assembly according to claim 8, comprising a car (10) according to claim 7, wherein :
- the first-class assembly (20) comprises first (32a) and second (32b) first-class platform panels, the first first-class platform panel (32a) having a first width, taken in the transverse direction (Y), and the second first-class platform panel (32b) having a second width, taken in the transverse direction (Y), greater than the first width;
- the second-class assembly (22) comprises first (52a) and second (52b) second-class platform panels, having substantially identical widths, taken in the transverse direction (Y).

10. A method of reconfiguring an assembly according to claim 8 or 9, **characterised in that** it comprises:
- the removal of the first-class seats (24) or the second-class seats (44) respectively;
- moving each aisle panel from the first configuration to the second configuration, respectively from the second configuration to the first configuration;
- assembling the second-class seats, or respectively the first-class seats.
